# EUROPEAN PATENT APPLICATION

(11) **EP 3 794 956 A1**
(43) Date of publication of application: **24.03.2021**
(21) Application number: 19804250.9
(22) Date of filing: 13.05.2019
(51) Int. Cl.: A23L 2/39, A23L 2/38, A23L 5/00

(54) **POWDERED BEVERAGE COMPOSITION AND METHOD FOR PREPARING SAME**

(30) Priority: 14.05.2018 JP 2018092732
(71) Applicant: Kuki Sangyo Corporation, Yokkaichi-shi, Mie 510-0059 (JP)
(72) Inventor: HARADA Sendai, Yokkaichi-shi, Mie 510-0059 (JP)
(74) Representative: White, Duncan Rohan
(86) International application number: PCT/JP2019/018873
(87) International publication number: WO 2019/221045

(57) **Abstract**

Provided are a powdered sesame beverage composition with a reduced fat and oil content, ease of drinking, and excellent handleability and a method for producing the same. A powdered beverage composition according to the present invention is a powdered beverage composition containing a ground product of sesame, and the ground product of sesame is in a non-paste form and has an oil content of smaller than 30% by mass relative to the total mass of the ground product, a 50% cumulative diameter ranging from 8 to 30 µm, preferably 8 to 20 µm, and a 90% cumulative diameter ranging from 50 to 150 µm.

## Description

### TECHNICAL FIELD

The present invention relates to a powdered sesame beverage composition with a low fat and oil content and to a method for producing the same.

### BACKGROUND ART

Sesame is known as a food containing components such as sesamin, in addition to dietary fibers, calcium, iron, zinc, and other components, having a high nutritive value, and also having excellent functionalities such as an antioxidative property. Sesame is widely used in the forms of sesame oil, roasted sesame, ground sesame, paste sesame, or the like for both household and professional uses. Paste sesame is in a paste form (sesame paste) produced by pounding and kneading in an attrition mill after sesame seeds are carefully selected, washed with water, husked if necessary, and subjected to a roasting process. As its applications, the paste sesame has been used by mixing it in other foods such as sesame tofu, dressings, or sauces.

Conventionally, a method for producing paste sesame has been developed as in Patent Literature 1. In this production method, paste sesame is produced by mixing sesame paste obtained by triturating seeds of sesame with an emulsified aqueous solution, and sugar or a preservative as necessary. This emulsified aqueous solution is obtained by uniformly mixing an emulsifier such as a sucrose fatty acid ester, a sorbitan fatty acid ester, or a glycerol fatty acid ester, a liquid fat and oil, and water using a homogenizer. It is said that in this production method, paste sesame that easily mixes with a water-soluble component and tastes pleasant in the mouth can be obtained, and particularly, its retention of a dispersed state after being left is excellent.

In addition, a method for producing sesame paste containing an aqueous solvent and having an excellent flavor without losing its feeling of richness has been developed as in Patent Literature 2. In this production method, a mixture in which an aqueous solvent from 70% by weight to 95% by weight is added to a sesame raw material from 5% by weight to 30% by weight is finely ground and processed using a predetermined wet fine grinder.

### PRIOR ART DOCUMENTS

### PATENT DOCUMENTS

Patent Literature 1: JP 2000-14337 A
Patent Literature 2: JP 2014-233251 A

### SUMMARY OF THE INVENTION

### PROBLEMS TO BE SOLVED BY THE INVENTION

Sesame contains as much as 50% by mass or larger fat and oil content. In the case where sesame with such a high oil content left as it is like conventional paste sesame (sesame paste) is to be used as a raw material, the following disadvantages may occur. Specifically, (1) sesame cannot be used for low calorie-oriented products because of its high calorie content, (2) the additive amount of sesame to non-oil dressings or other processed products emphasizing on being oil free is limited, and (3) it is difficult to apply sesame to foods (confectionery, bread, and fermented foods including miso (fermented soybean paste)) the processing of which can be obstructed due to separation of the fat and oil content and difficulty in use.

In recent years, instant beverage compositions that are powdered or granular solids and can be simply prepared by dispersing or dissolving them in a liquid such as water have been widely popular. As instant beverage compositions, for example, instant coffee, matcha (powdered green tea) powder, cocoa powder, and the like are commercially available.

When ground sesame is used as a beverage composition which is powder, it is considered necessary to take into consideration ease of drinking such as smoothness through the throat and feeling on the tongue. If sesame is finely pulverized in order to eliminate these concerns, its large amount of fat and oil content will result in paste sesame, meaning not only that its powdered form will not be maintained, but also that manufacturing work such as subdivision and weighing will become difficult to proceed. Furthermore, if paste sesame is left for a long period of time, the fat and oil content may be separated. When paste sesame is dissolved in an aqueous solvent, oil and water repel each other, readily leading to formation of lumps (aggregates such as secondary particles). This makes it difficult to produce an evenly mixed solution. Such a characteristic will cause compromised handleability (handling).

The present invention has been made in view of the aforementioned circumstances and has an object to provide a powdered sesame beverage composition with a reduced fat and oil content, ease of drinking, and excellent handleability and to provide a method for producing the same.

### MEANS FOR SOLVING THE PROBLEM

A powdered beverage composition according to the present invention is a powdered beverage composition containing a ground product of sesame, and the ground product of sesame is in a non-paste form and has an oil content of smaller than 30% by mass relative to the total mass of the ground product and a 50% cumulative diameter ranging from 8 to 30 µm. In particular, the ground product of sesame has a 50% cumulative diameter ranging from 8 to 20 µm.

The ground product of sesame may have at least one peak in a range of particle diameter exceeding 10 µm in a grain size distribution diagram in which the vertical axis indicates existence ratio and the horizontal axis indicates particle diameter.

The ground product of sesame may have a 90% cumulative diameter ranging from 50 to 150 µm.

A method for producing a powdered beverage composition according to the present invention is a method for producing the powdered beverage composition described above according to the present invention, including an oil-squeezing step of heating and oil-squeezing sesame as a raw material to make an oil content in the raw material smaller than 30% by mass; and a grinding step of grinding the oil-squeezed raw material to be a ground product in a non-paste form that has a 50% cumulative diameter ranging from 8 to 30 µm.

After the oil-squeezing step and before the grinding step, the method may include a step of coarsely grinding the oil-squeezed raw material.

The oil-squeezing step may be a step of heating and oil-squeezing the sesame as the raw material at a temperature from 120°C to 180°C.

The grinding step may be a step of grinding the oil-squeezed raw material to provide a ground product that has a 50% cumulative diameter ranging from 8 to 30 µm and a 90% cumulative diameter ranging from 50 to 150 µm.

### EFFECTS OF THE INVENTION

The powdered beverage composition according to the present invention is a beverage composition which is powder, containing a ground product of sesame, and the ground product of sesame is in a non-paste form and has an oil content of smaller than 30% by mass relative to the total mass of the ground product and a 50% cumulative diameter ranging from 8 to 30 µm. This composition thus provides a reduced fat and oil content, ease of drinking, and excellent handleability. The reduced fat and oil content can lead to a reduced calorie and makes it less likely to form lumps when the composition is dissolved in an aqueous solvent. Handleability is excellent and the separation or ooze of oil also does not occur with the lapse of time because of a predetermined powdered form (powdery form).

The method for producing a powdered beverage composition according to the present invention includes an oil-squeezing step of heating and oil-squeezing sesame as a raw material to make an oil content in the raw material smaller than 30% by mass; and a grinding step of grinding the oil-squeezed raw material to be a ground product that has a 50% cumulative diameter ranging from 8 to 30 µm. This method thus can produce a powdered sesame beverage composition with a reduced fat and oil content, ease of drinking, and excellent handleability.

As the method includes a step of coarsely grinding the oil-squeezed raw material after the oil-squeezing step and before the grinding step, it becomes easier to finely grind the raw material in the grinding step.

As the oil-squeezing step is a step of heating and oil-squeezing the sesame as the raw material at a temperature from 120°C to 180°C, a powdered sesame beverage composition with a rich flavor can be produced while preventing it from burning.

### BRIEF DESCRIPTION OF THE DRAWINGS

Fig. 1 is a schematic view of production steps of a powdered beverage composition according to the present invention.
Fig. 2 is a grain size distribution diagram of a powdered beverage composition in Example 1.
Fig. 3 is a grain size distribution diagram of a powdered beverage composition in Example 2.
Fig. 4 is a grain size distribution diagram of a powdered beverage composition in Example 3.
Fig. 5 is a grain size distribution diagram of a powdered beverage composition in Example 4.
Fig. 6 is a grain size distribution diagram of a powdered beverage composition in Example 5.
Fig. 7 is a grain size distribution diagram of a powdered beverage composition in Example 6.
Fig. 8 is a grain size distribution diagram of a powdered beverage composition in Example 7.
Fig. 9 is a grain size distribution diagram of a powdered beverage composition in Example 8.
Fig. 10 is a grain size distribution diagram of a powdered beverage composition in Example 9.
Fig. 11 is a grain size distribution diagram of a powdered beverage composition in Example 10.
Fig. 12 is a grain size distribution diagram of a powdered beverage composition in Example 11.
Fig. 13 is a grain size distribution diagram of a powdered beverage composition in Example 12.
Fig. 14 is a grain size distribution diagram of a powdered beverage composition in Comparative Example 1.
Fig. 15 is a grain size distribution diagram of a powdered beverage composition in Comparative Example 2.
Fig. 16 is a grain size distribution diagram of a powdered beverage composition in Comparative Example 3.
Fig. 17 is a grain size distribution diagram of a powdered beverage composition in Comparative Example 4.
Fig. 18 is a grain size distribution diagram of a powdered beverage composition in Comparative Example 5.
Fig. 19 is a grain size distribution diagram of a powdered beverage composition in Reference Example A.
Fig. 20 is a grain size distribution diagram of a powdered beverage composition in Reference Example B.
Fig. 21 is a grain size distribution diagram of a powdered beverage composition in Reference Example C.
Fig. 22 is a grain size distribution diagram of a powdered beverage composition in Reference Example D.
Fig. 23 is a photograph of the powdered beverage composition in Example 3.
Fig. 24 includes photographs illustrating states after stirring in Examples 10 and 12 and Comparative Example 3.
Fig. 25 includes photographs illustrating states after stirring in Reference Examples A and B.
Fig. 26 includes photographs illustrating states after stirring in Reference Examples C and D.

### MODE FOR CARRYING OUT THE INVENTION

A powdered beverage composition according to the present invention is composed of a ground product of sesame having a small amount of oil content and a predetermined grain size distribution. Before a grinding step, the oil content is reduced by oil-squeezing not to be in a paste form like paste sesame, but in a solid powdered form (non-paste form). Specifically, the oil content is smaller than 30% by mass relative to the total mass of the ground product, and the 50% cumulative diameter ranges from 8 to 30 µm.

The ground product of sesame included in the powdered beverage composition according to the present invention is an aggregation (powder and granular material) of fine powder or particles obtained by finely grinding sesame as a raw material. The "X% cumulative diameter" used in the present invention is a particle diameter in a case where the frequency (%) of particle diameter is accumulated from a small value of particle diameter and an accumulation value is X% in measuring a particle diameter distribution (grain size distribution) of the ground product using a known grain size distribution measuring apparatus (a laser diffraction grain size distribution measuring apparatus, for example).

In the present invention, in the ground product of sesame, the accumulation value of the frequency of particles having a particle diameter ranging from 8 to 30 µm is 50%, that is, the 50% cumulative diameter is specified to range from 8 to 30 µm. When the 50% cumulative diameter ranges from 8 to 30 µm, the ground product dissolved in a liquid such as water is not easily lumped. The ground product is thus suppressed from being caught in the throat and leaving a rough texture on the tongue, providing a convenient and easy-to-drink beverage. In the ground product of sesame, the 50% cumulative diameter preferably ranges from 8 to 20 µm and more preferably from 8 to 15 µm. In this case, many finer particles are contained, thereby further improving ease of drinking.

In the ground product of sesame, the 90% cumulative diameter preferably ranges from 50 to 150 µm. The fine particles are contained, whereas a coarse ground product such as an epidermis is contained as particles that are large to some extent. The strength of flavor or the strength of taste of sesame can be thus improved and a property closer to paste sesame can be obtained, than in a case of not containing such large particles.

In a grain size distribution diagram in which the vertical axis indicates existence ratio and the horizontal axis indicates particle diameter by the measuring method described above, the ground product of sesame preferably has at least one peak in a range of particle diameter exceeding 10 µm and preferably exceeding 30 µm. As there is a peak (around 60 µm) on the larger side of particle diameter, relatively large particles in this range are contained to some extent, and the strength of flavor or the strength of taste of sesame can be improved as mentioned above. In addition, the aggregation of particles can be suppressed, and lumps are less likely to occur.

The oil content is made smaller than 30% by mass relative to the total mass of ground product of sesame. Moreover, the "oil content" refers to the amount of fat and oil content in a ground product of sesame and can be easily measured by extracting an oil content using diethyl ether or the like. When the oil content is 30% by mass or larger, the ground product is not in a powdered form but in a paste form when ground (triturated) as described with reference to examples below. Even in a case where the ground product is largely in a powdered form, the adhesion may be high, whereby the processability may be poor, or the fat and oil content may exude to the surface with the lapse of time. The lower limit of the oil content is not limited but as long as a usual oil-squeezer is used and heating is carried out in a range not spoiling the flavor due to carbonization or the like, the lower limit of the oil content can be about 3% by mass.

The oil content is preferably 25% by mass or smaller and more preferably 20% by mass or smaller. Reducing the oil content to 20% by mass or smaller leads to a calorie reduction and relatively increases the content ratio of other components contributing to health. The adhesion is also particularly low, and the ground product is easily dispersed in an aqueous solvent.

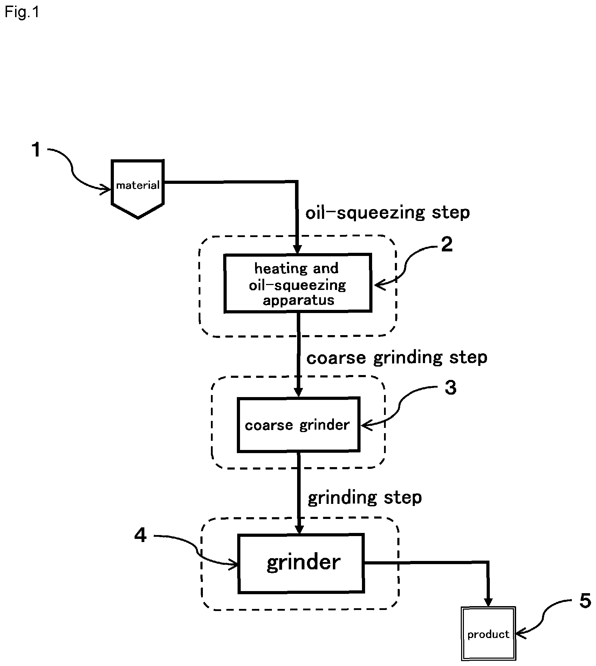

A method for producing a powdered beverage composition according to the present invention is described based on Fig. 1. Fig. 1 is a schematic view of production steps of a powdered beverage composition according to the present invention. As illustrated in Fig. 1, these production steps include an oil-squeezing step using a heating and oil-squeezing apparatus 2, a coarse grinding step using a coarse grinder 3, and a grinding step using a grinder 4. Here, the coarse grinding step is not an essential step and is applied as necessary. Sesame as a raw material 1 is not limited and any sesame seeds such as white sesame, black sesame, golden sesame, or brown sesame can be used. Sesame may be used as a raw material as it is or roasted sesame may be used. Roasting by hot air, microwave, a gas burner, or the like can be employed. The husk of sesame seeds is preferably left without taking it off. Hereinafter, each step will be described.

### [Oil-squeezing step]

This step is a step of heating and oil-squeezing sesame as a raw material using the heating and oil-squeezing apparatus 2 to make the oil content in the raw material smaller than 30% by mass. Normally, in a case of oil-squeezing sesame oil or the like, the temperature is set to 200°C or higher but in this step, oil-squeezing is carried out at a lower temperature intentionally. Specifically, the temperature is preferably from 120°C to 180°C. Thus, a processed sesame product with a rich flavor can be produced while the product is prevented from burning. A heater is not limited and heating by gas or electricity can be employed. For example, a flat kettle or a rotary kiln can be used. As an oil-squeezing apparatus, a known press-type oil-squeezing apparatus or the like used for oil-squeezing sesame oil or the like can be used. An apparatus combining a heating apparatus and an oil-squeezing apparatus may be used.

### [Coarse grinding step]

This step is a step of coarsely grinding lumps of the raw material (pressed product) after being pressed, to loosen the lumps using the coarse grinder 3 such a crusher. Lumps may be manually loosened using a mesh or the like without using a crusher. Loosening the lumps can facilitate fine grinding of the raw material in the grinding step, whereby the ground product having a 50% cumulative diameter ranging from 8 to 30 µm can be easily produced.

### [Grinding step]

This step is a step of grinding the oil-squeezed raw material using the grinder 4 to produce a ground product having a 50% cumulative diameter ranging from 8 to 30 µm. As the grinder 4, a ball mill, an air flow grinder, a stone-mill-type continuous attrition mill pounding sesame between upper and lower disks, a high-speed rotation grinder, or the like can be used. A clearance that serves as a pounding part in the continuous attrition mill between the upper and lower disks is not limited but is set to about 0 µm to 200 µm.

The raw material 1 becomes a product 5 through each step described above. The product 5 is a powdered beverage composition according to the present invention and composed of a ground product of sesame that is in a solid powdered form, has a small amount of oil content, and has a predetermined grain size distribution.

The powdered beverage composition according to the present invention may be not only a product made of the ground product of sesame alone but also a processed product produced by mixing other compounding agents in the ground product of sesame in a range of not compromising desired effects (less likely to produce lumps, with excellent handling). Examples of the other compounding agents include preservatives, perfumes, colorants, antioxidants, and nutritious supplements. It should be noted that no components incapable of maintaining powdered form, such as an aqueous solvent or a liquid fat and oil (fat and oil compounded externally, other than the fat and oil content originally included) are mixed. Furthermore, the powdered beverage composition according to the present invention has a low oil content, has a predetermined grain size distribution and therefore has excellent dispersibility in an aqueous solvent. The powdered beverage composition thus more preferably contains no dispersant or the like, and is composed of the ground product of sesame alone.

The powdered beverage composition according to the present invention can be dissolved in a liquid such as water and used as a beverage. For example, the composition can be dissolved in water, warm water, milk, soy milk, powdered soup, or the like for drinking use, whereby the nutritional components of sesame can be easily supplemented. In addition, a product may be obtained by combining the powdered beverage composition with other powdered products, such as soybean flour, sugar, or milk.

In the powdered beverage composition according to the present invention, approximately 80% of the original oil content is reduced. Thus, the calorie is also reduced significantly and applicability to low-calorie products is significantly expanded. Because of the reduction in the oil content, components such as dietary fibers, calcium, iron, or zinc, which attract attention as healthy foods, relatively increase by a factor of approximately two. These nutrient components have a considerably high component value compared to other grains. These active components can be given with not additives or chemical synthetic compounds but natural materials. Expected application examples include food for ameliorating osteoporosis, food against obesity, and care food (smile care food) enabling the intake of specific nutrient components thanks to the high protein content of the product.

Since the powdered beverage composition according to the present invention has low adhesion and is in a powdery form, not only subdivision and measurement are easy but also the separation or oozing of oil content does not occur over time, and therefore handling is very easy. In addition, since the composition disperses instantly in an aqueous solvent and is not easily lumped, the product will not be caught in the throat or leave a rough texture on the tongue, which provides an easy-to-drink beverage. When dispersed in soup or the like, the deliciousness of the aftertaste increases with a rich taste imparting effect. In particular, among "salt reduced products" whose market expansion is expected, many products are enhanced with deliciousness and rich taste instead of use of salt. The powdered beverage composition can be applied to the market targeting salt reduction.

In the powdered beverage composition according to the present invention, conventional disadvantages of sesame can be solved by reducing the fat and oil content. Thus, the possibility of sesame such as use in processed products that it was difficult for food processing manufacturers to pursue, is markedly expanded and an expansion of the market of sesame can be achieved. The processed sesame product is widely used not only as a raw material for processing but also for the household use and it is possible to respond to the rising health needs in an aging society in which people aged 65 or older will account for 25% or higher of the total population.

### [Examples]

An example of the powdered beverage composition according to the present invention was produced through the steps illustrated in Fig. 1 described above, and the characteristics and grain size distribution of the obtained powdered beverage composition were measured. A specific production procedure of the powdered beverage composition is as follows. Seeds of white sesame were used as a raw material and these seeds were roasted to be roasted sesame. After this roasted sesame was heated to a range from 120°C to 180°C using a gas-heating-type flat kettle, the roasted sesame was put in an oil-squeezing apparatus to press, and the fat and oil content in the raw material was reduced. The raw material after been pressed was coarsely ground to loosen the material, which was then transferred to put in a grinder and ground to fine particles using the grinder. As the grinder, a stone-mill-type continuous attrition mill pounding sesame between upper and lower disks was used. The clearance serving as a pounding part in this grinder between the upper and lower disks was set to minimum to adjust the supply amount to the grinder so that the grain size was adjusted.

### [Reference Examples]

A relation between the oil content to maintain the powder form and the particle diameter (grain size distribution) was examined.

As listed in Table 1, with the heating temperature in the oil-squeezing step adjusted within the above-described range and the conditions in the oil-squeezing apparatus adjusted, five types of products having an oil content of 15% by mass, 20% by mass, 25% by mass, 27% by mass, and 33% by mass were produced (Reference Examples 1 to 5). As for the oil content in each example, the properties of the powder form when the 50% cumulative diameter (D50) was set to smaller than 10 µm were observed to evaluate whether the powder form was maintained. The results are listed in Table 1.

**Table 1**

| | Oil content | Maintained in powder form with D50 smaller than 10 µm |
|---|---|---|
| Reference Example 1 | 15% by mass | ○ |
| Reference Example 2 | 20% by mass | ○ |
| Reference Example 3 | 25% by mass | ○ |
| Reference Example 4 | 27% by mass | ○ |
| Reference Example 5 | 33% by mass | X (325 µm) |

In Table 1, "○" indicates the product was in the powder form having low adhesion and high fluidity, whereas "X" indicates the product was in the paste form or the like having high adhesion, instead of the powder form having high fluidity. As can be seen from Table 1, Reference Example 5 (oil content: 33% by mass) was the only example that failed to maintain the powder form. The limit D50 at which the powder form was able to be maintained with this oil content was 325 µm. From this result, it was found that the powder form was able to be maintained even with D50 below 10 µm if the oil content was smaller than 30% by mass. Thus, the oil content was required to be smaller than 30% by mass (preferably 25% by mass or smaller) to make the powdered beverage composition according to the present invention in the powder form having low adhesion and high fluidity.

### [Examples 1 to 9 and Comparative Examples 1 and 2]

A relation between the particle diameter (grain size distribution) and ease of drinking was examined.

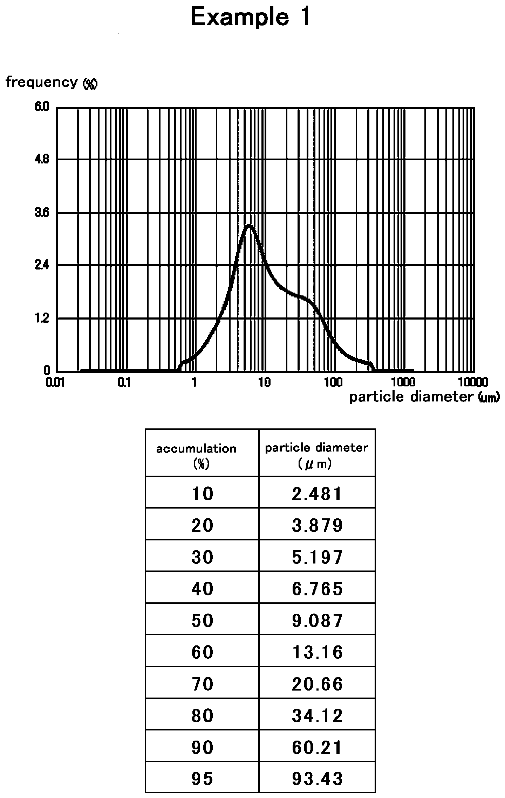

With the supply amount to the grinder in the grinding step adjusted so that the grain size was adjusted, powdered beverage compositions in Examples 1 to 9 and Comparative Examples 1 and 2 were produced. The oil content of each composition was smaller than 30% by mass. The grain size distribution of each composition thus obtained was measured using a laser diffraction grain size distribution measuring apparatus. The grain size distribution diagram of Example 1 is illustrated in Fig. 2. In the grain size distribution diagram, the vertical axis indicates existence ratio (frequency (%)) and the horizontal axis indicates particle diameter (µm). This grain size distribution diagram indicates that the powdered beverage composition in Example 1 has a 50% cumulative diameter of 9.087 µm and a 90% cumulative diameter of 60.21 µm.

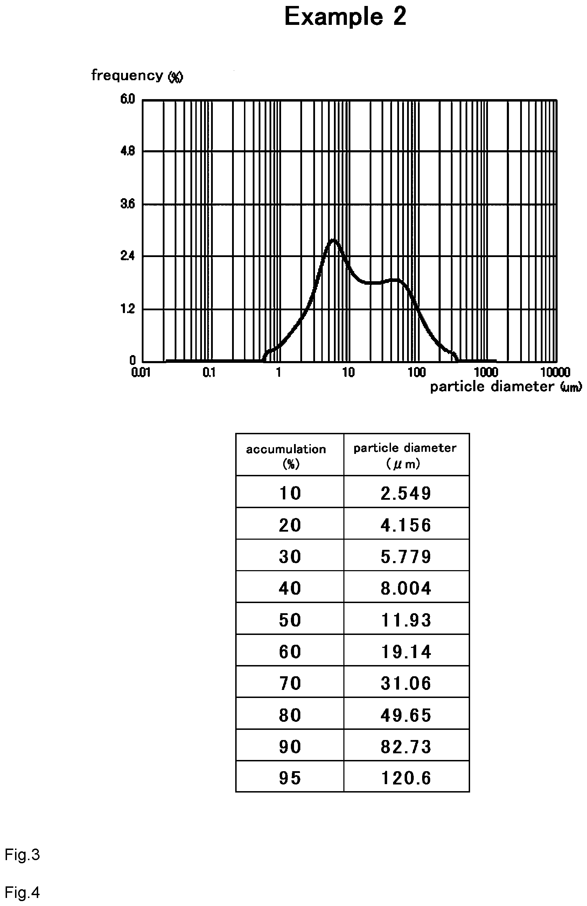

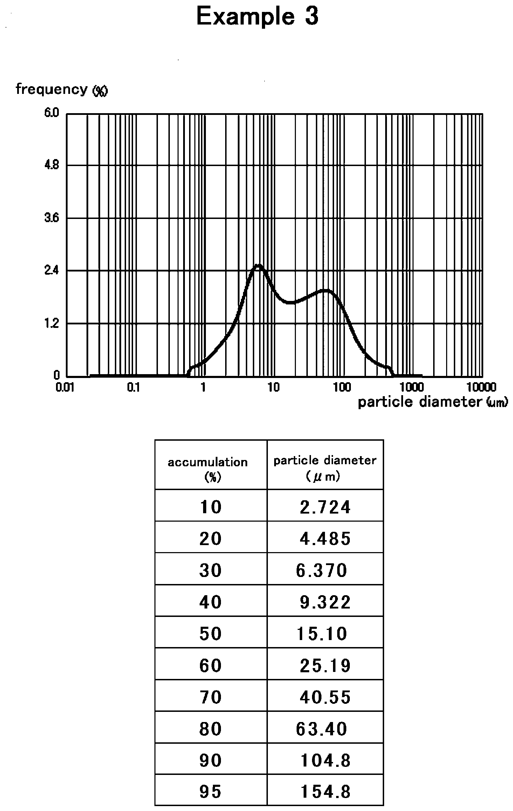

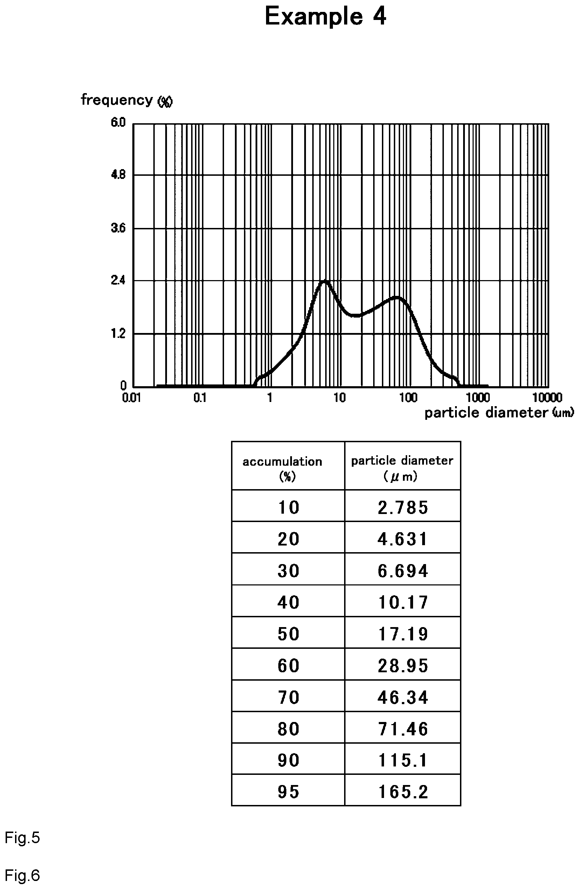

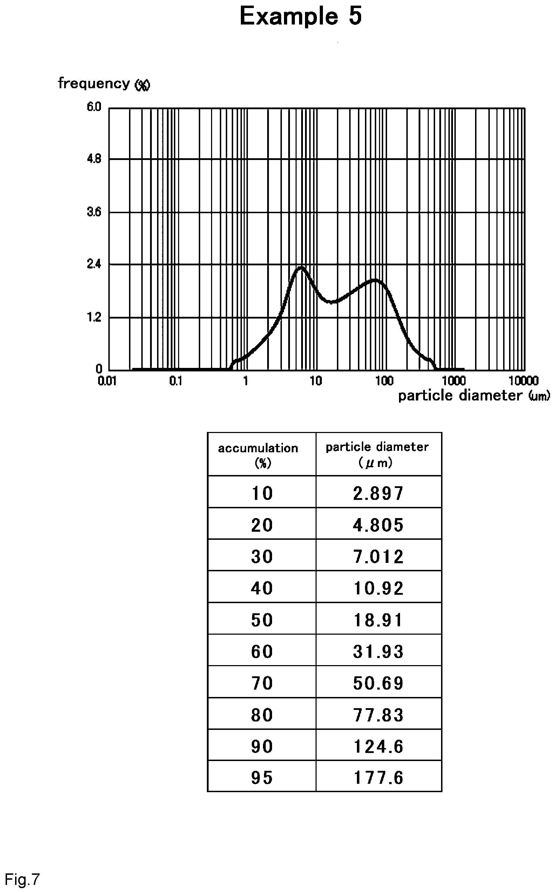

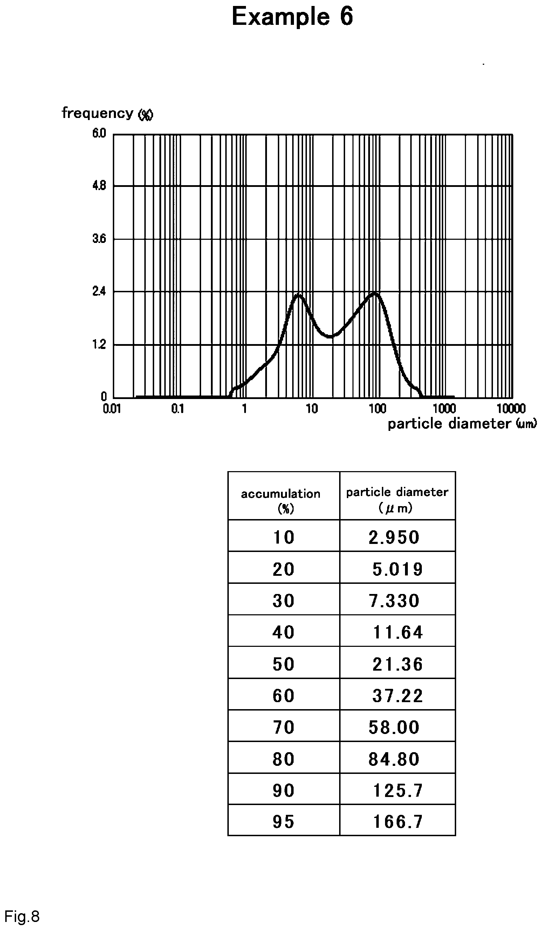

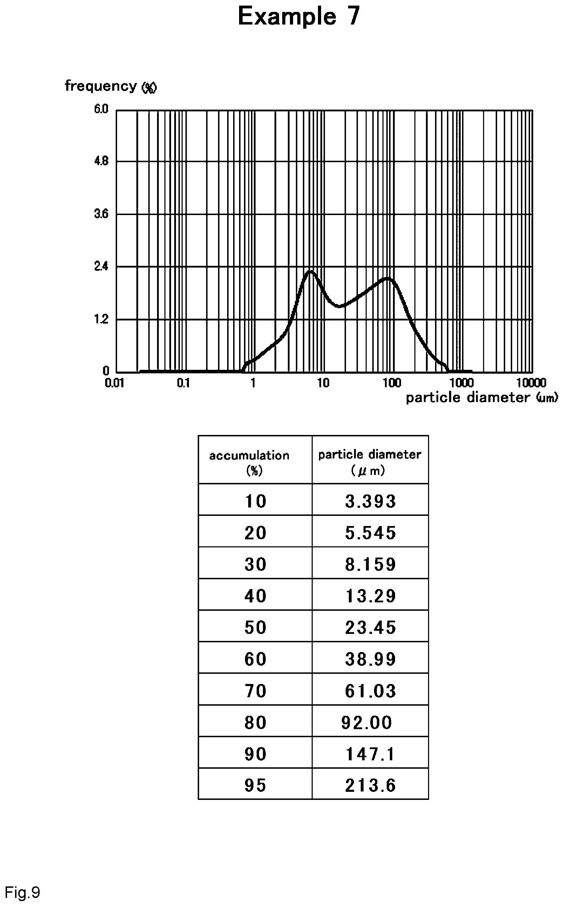

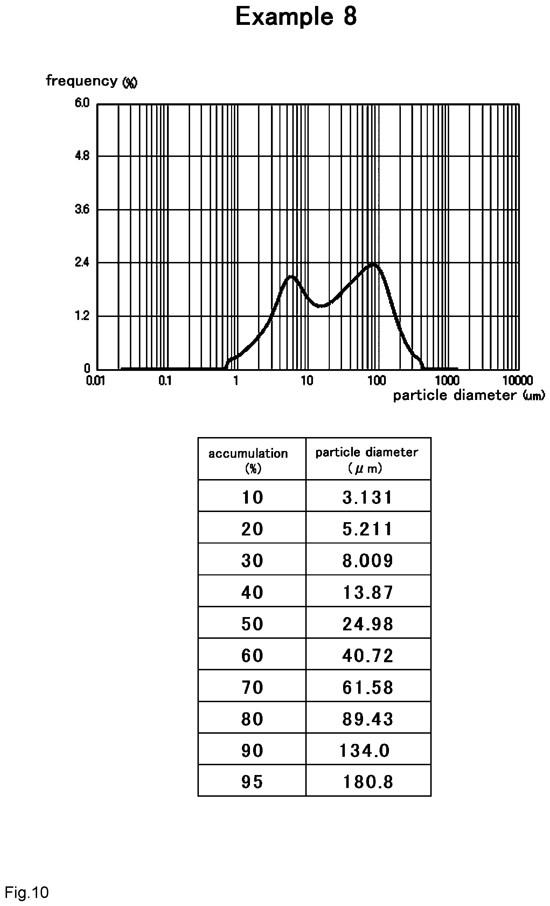

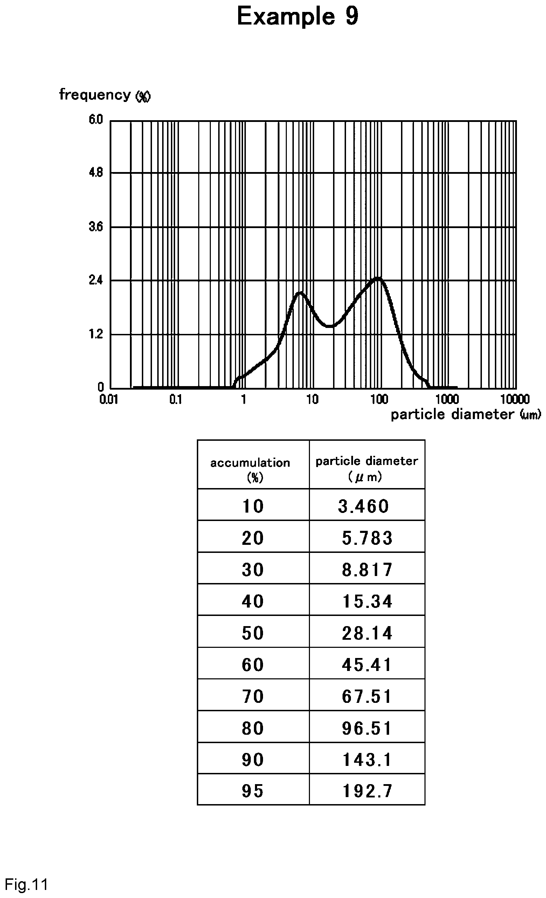

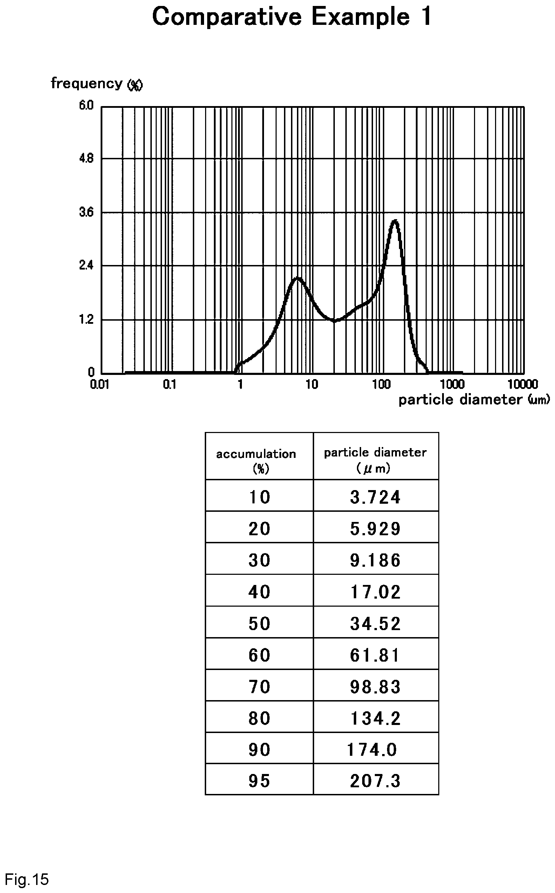

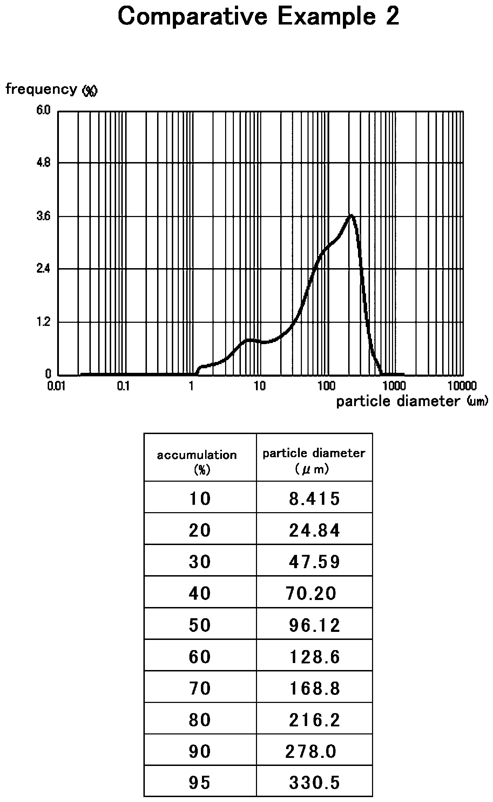

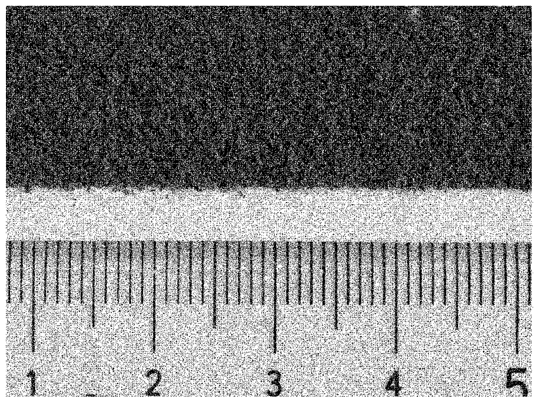

In the same manner as in Example 1, the grain size distribution diagrams of Example 2 to Example 9 are respectively illustrated in Figs. 3 to 10, and the grain size distribution diagrams of Comparative Example 1 and Comparative Example 2 are respectively illustrated in Figs. 14 and 15. Fig. 23 is a photograph of the powdered beverage composition in Example 3.

Ease of drinking of each powdered beverage composition as a beverage was evaluated from the viewpoint of whether it was caught in the throat and its texture on the tongue was smooth. When a fine-particle beverage composition is used as a beverage, the particles are preferably not caught in the throat during swallowing. Furthermore, a rough texture on the tongue leads to bad aftertaste or the like, which should be preferably suppressed.

### (1) Caught in the throat

In 20 ml of water (25°C), 2 g of each composition was dissolved. The resultant mixture was stirred for a certain period of time to prepare a test beverage. Each test beverage was subjected to sensory evaluation by five subjects. The degree of each composition caught in the throat was evaluated on the following five-point scale. The evaluation scores given by the five subjects were averaged. The results are listed in Table 2.
5 points: Caught in the throat, irritating.
4 points: Caught in the throat, somewhat irritating.
3 points: Caught in the throat, but not irritating very much.
2 points: Slightly caught in the throat, but not irritating at all.
1 point: Smooth on the throat.

### (2) Texture on the tongue

In 20 ml of water (25°C), 2 g of each composition was dissolved. The resultant mixture was stirred for a certain period of time to prepare a test beverage. Each test beverage was subjected to sensory evaluation by five subjects. The degree of the smoothness of the texture on the tongue was evaluated on the following five-point scale. The evaluation scores given by the five subjects were averaged. The results are listed in Table 2.
5 points: Created a rough texture on the tongue, irritating.
4 points: Created a rough texture on the tongue, somewhat irritating.
3 points: Created a rough texture on the tongue, but not irritating very much.
2 points: Slightly created a rough texture on the tongue, but not irritating at all.
1 point: Created a smooth texture on the tongue.

**Table 2**

| | 50% cumulative diameter (D50) (µm) | 90% cumulative diameter (D90) (µm) | Caught in the throat | Texture on the tongue |
|---|---|---|---|---|
| Example 1 | 9.087 | 60.21 | 1 | 1 |
| Example 2 | 11.93 | 82.73 | 1 | 1 |
| Example 3 | 15.10 | 104.8 | 1 | 1 |
| Example 4 | 17.19 | 115.1 | 1 | 1.2 |
| Example 5 | 18.91 | 124.6 | 1 | 1.4 |
| Example 6 | 21.36 | 125.7 | 1.4 | 1.8 |
| Example 7 | 23.45 | 147.1 | 1.8 | 2.4 |
| Example 8 | 24.98 | 134.0 | 2.6 | 2.8 |
| Example 9 | 28.14 | 143.1 | 2.8 | 3 |
| Comparative Example 1 | 34.52 | 174.0 | 3.8 | 4 |
| Comparative Example 2 | 96.12 | 278.0 | 5 | 5 |

As a result of the sensory evaluation, it was found that the composition caught in the throat was not irritating as long as the 50% cumulative diameter was 30 µm or smaller. A smaller 50% cumulative diameter exhibited a reduced tendency of being caught in the throat. In addition, it was found that a rough texture on the tongue was not irritating as long as the 50% cumulative diameter was 30 µm or smaller. Since the powdered beverage composition according to the present invention has a 50% cumulative diameter of 30 µm or smaller, and preferably 20 µm or smaller, the composition is suppressed from being caught in the throat and leaving a rough texture on the tongue, which provides ease of drinking.

Furthermore, as depicted in the grain size distribution diagrams of Examples 1 to 9 (Figs. 2 to 10), the powdered beverage composition according to the present invention has one peak (first peak) in a range of particle diameter of 10 µm or smaller and another peak (second peak) in a range of particle diameter exceeding 10 µm and 100 µm or smaller. In particular, Examples 1 to 5 (Figs. 2 to 6), resulting in good indicators for ease of drinking, have the second peak in a range of particle diameter from 40 to 80 µm, and the 90% cumulative diameter in these examples ranges from 60 to 130 µm. In Examples 1 to 5, the second peak is a peak having a smaller existence ratio than the first peak does. In Examples 1 to 5, it is considered that the grain size distribution described above further contributes to the improvement in the ease of drinking.

### [Examples 2, 6, 9, 10 to 12, Comparative Examples 3 to 5, and Reference Examples A to D]

A relation between the oil content and the particle diameter (grain size distribution) of sesame and a tendency to form lumps was examined.

With the heating temperature in the oil-squeezing step adjusted within the above-described range and the conditions in the oil-squeezing apparatus adjusted, products having an oil content of 15% by mass, 20% by mass, and 25% by mass were produced. The 50% cumulative diameter and the 90% cumulative diameter of these compositions are listed in Table 3. Note that the compositions in Examples 2, 6, and 9 in Table 3 are the same as the compositions in Examples 2, 6, and 9 in Table 2, in which ease of drinking was evaluated.

This test was also carried out on cocoa powder (Reference Examples A and B) and matcha powder (Reference Examples C and D) as example powdered beverage compositions other than sesame. The 50% cumulative diameter and the 90% cumulative diameter are listed in Table 3.

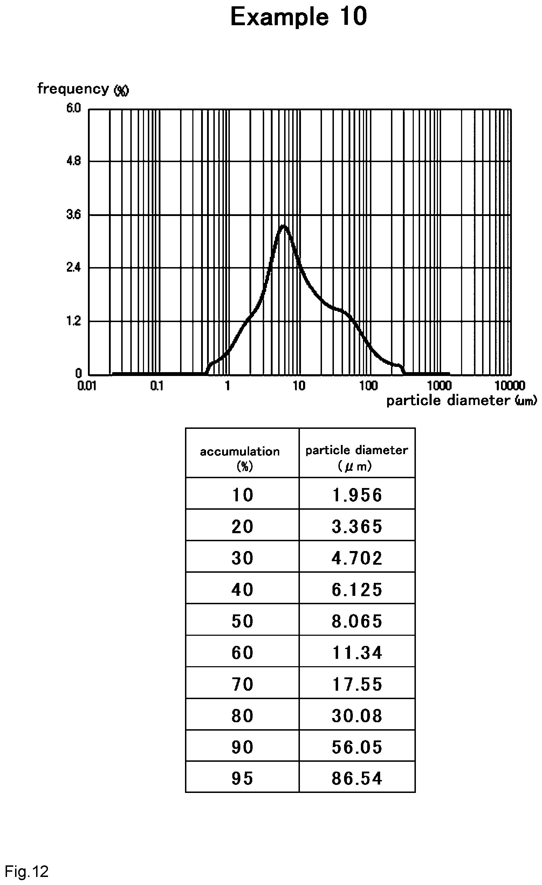

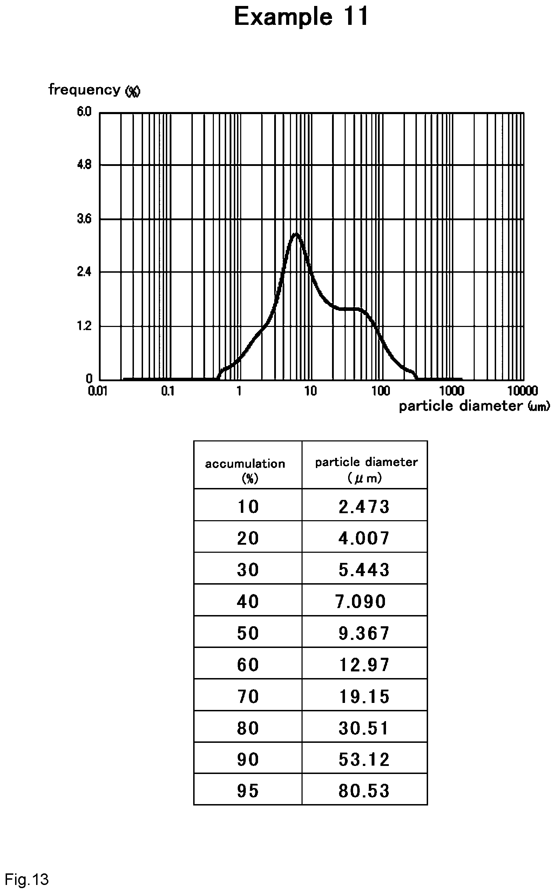

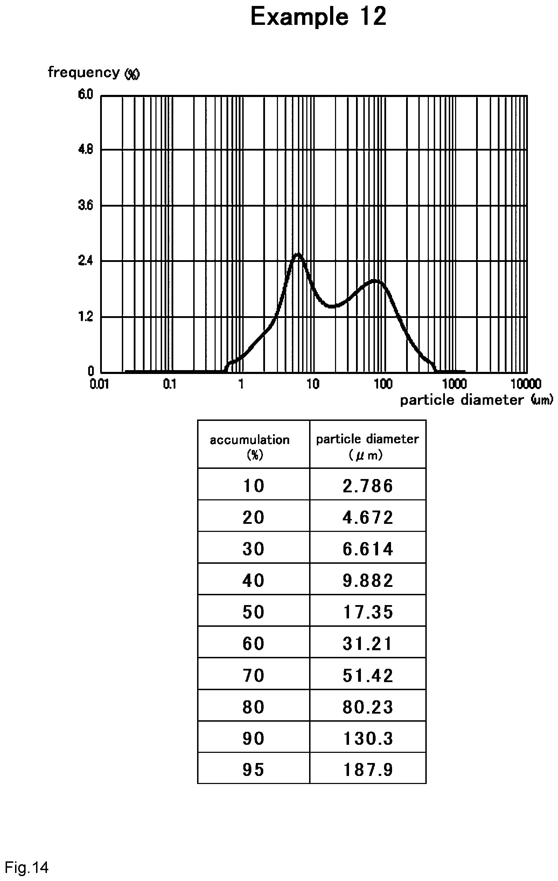

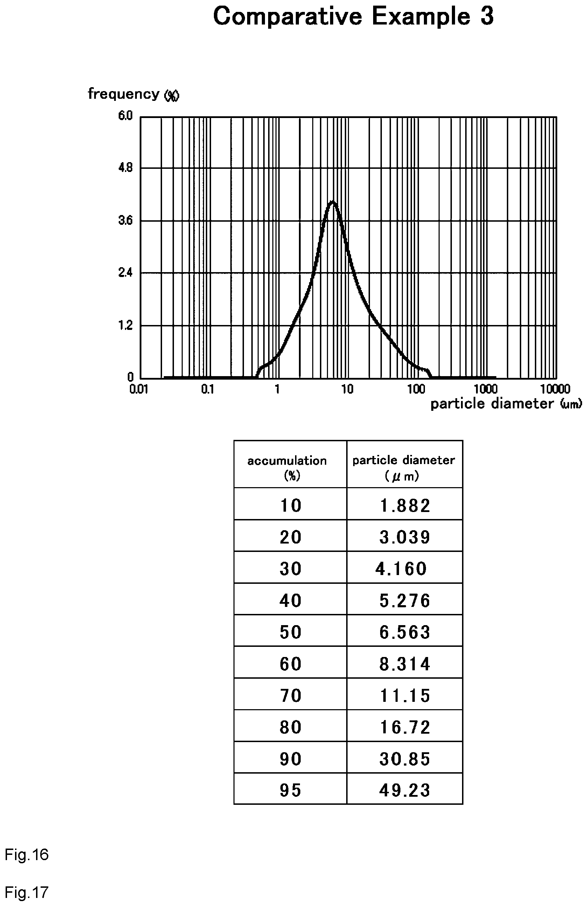

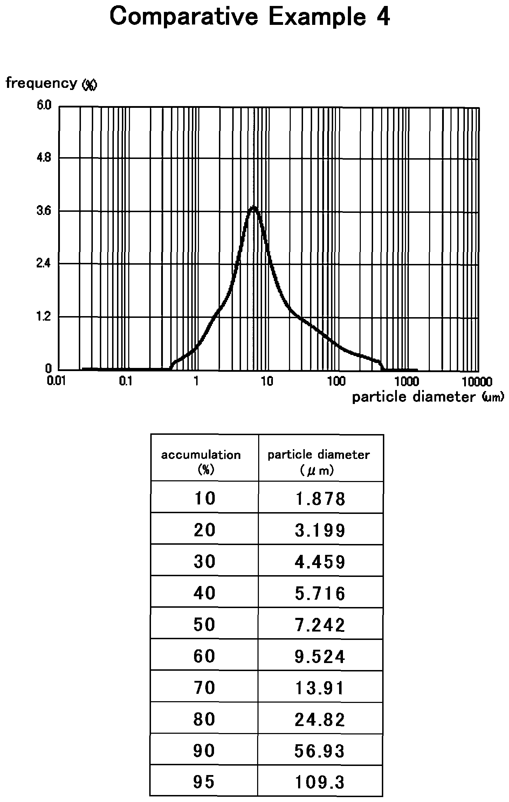

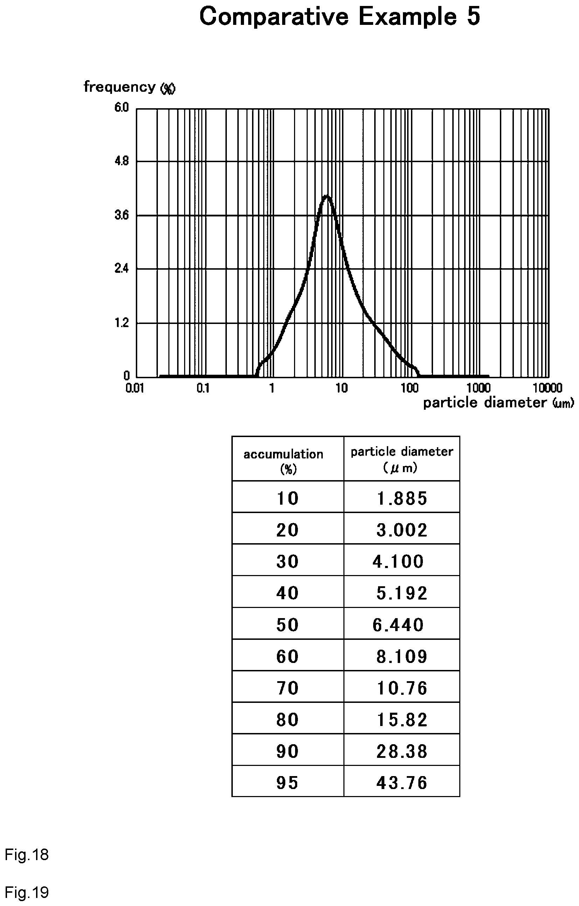

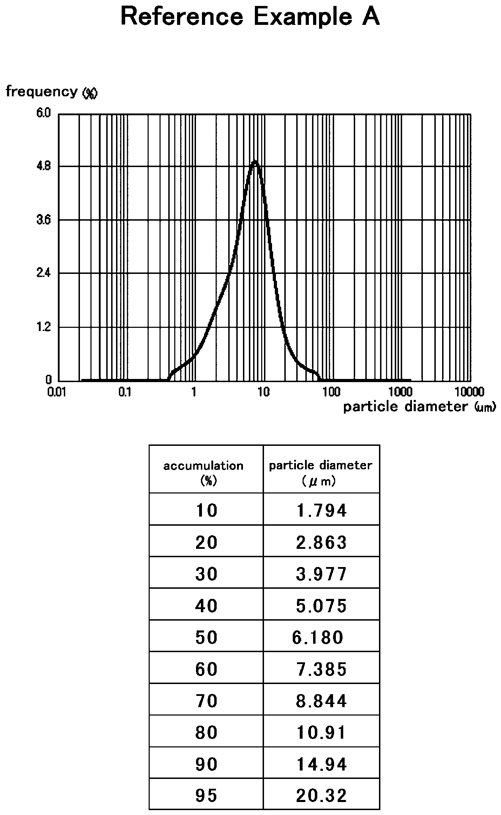

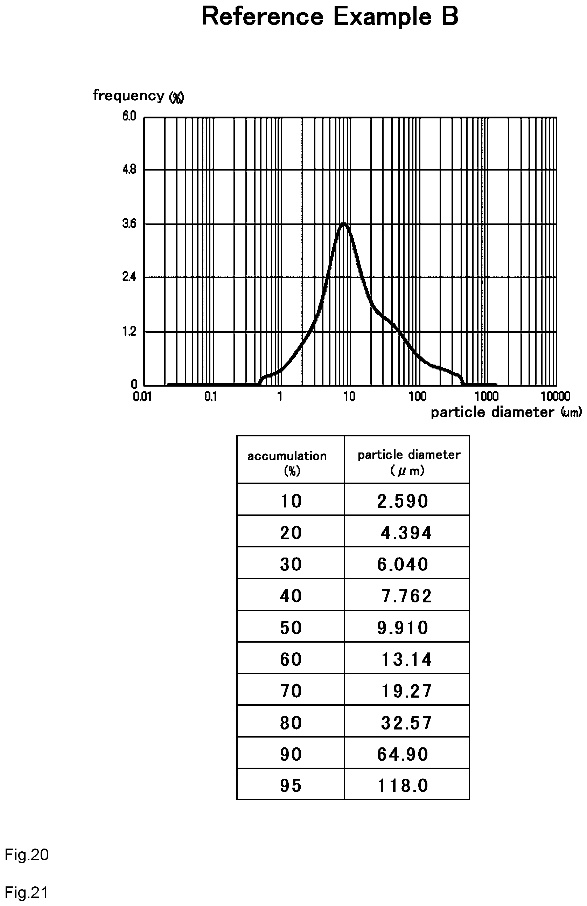

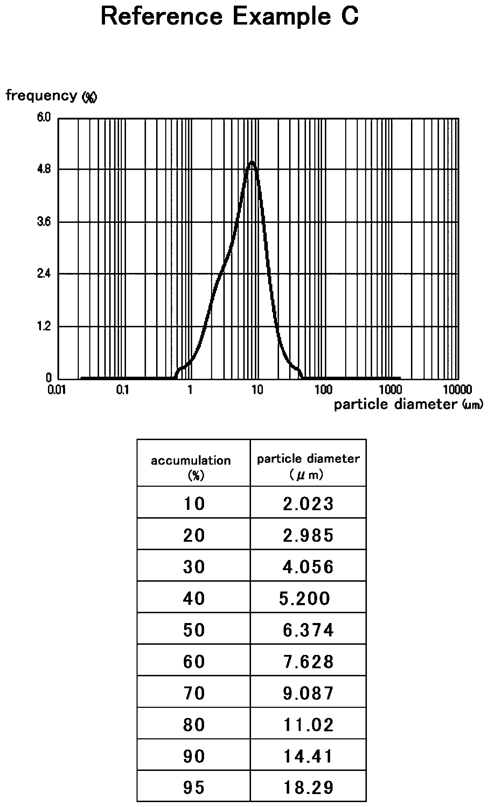

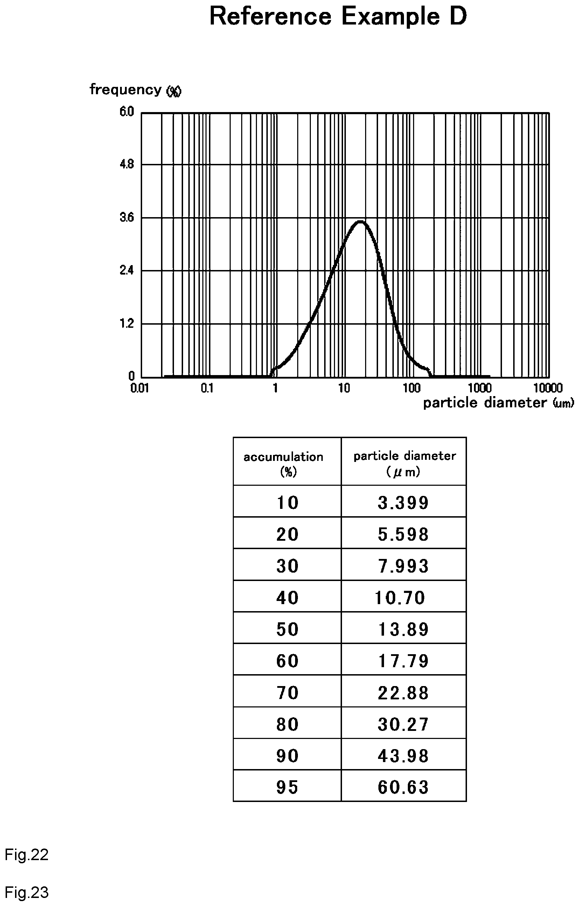

The grain size distribution diagrams of Examples 10 to 12 are respectively illustrated in Figs. 11 to 13, the grain size distribution diagrams of Comparative Examples 3 to 5 are respectively illustrated in Figs. 16 to 18, and the grain size distribution diagrams of Reference Examples A to D are respectively illustrated in Figs. 19 to 22.

### (3) Tendency to form lumps

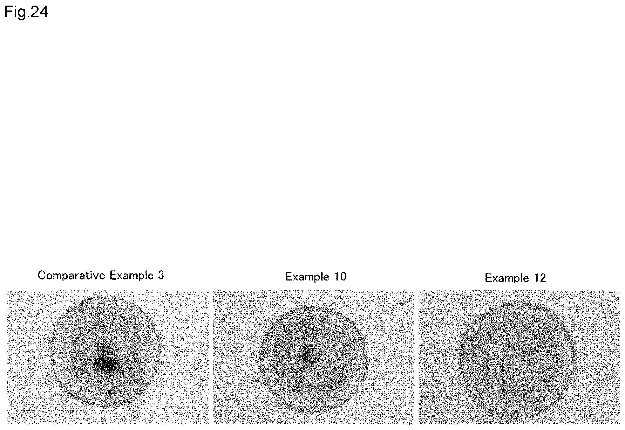

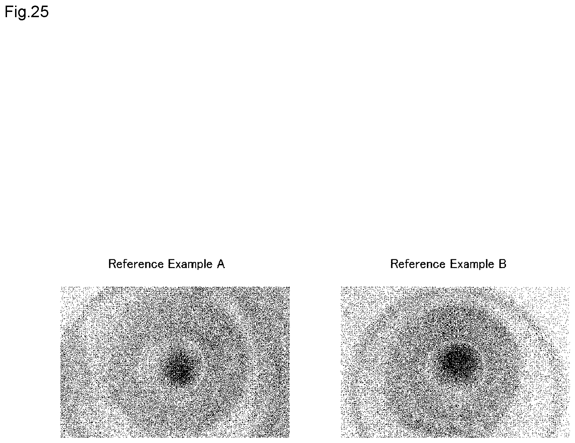

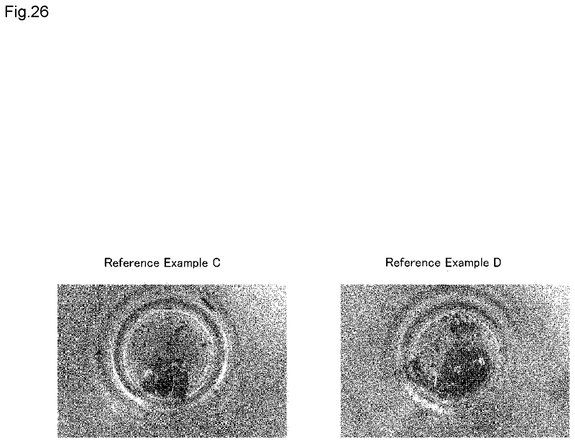

In 20 ml of water (25°C), 2 g of each composition was dissolved. The resultant mixture was stirred for a certain period of time and left, and thereafter forming of lumps was visually observed. The results are listed in Table 3. Fig. 24 illustrates a state after stirring of the compositions in Examples 10 and 12 and Comparative Example 3. Fig. 25 illustrates a state after stirring of the compositions in Reference Examples A and B. Fig. 26 illustrates a state after stirring of the compositions in Reference Examples C and D.

**Table 3**

| | Oil content | 50% cumulative diameter (D50) (µm) | 90% cumulative diameter (D90) (µm) | Tendency to form lumps |
|---|---|---|---|---|
| Example 10 | 15% by mass | 8.065 | 56.05 | Substantially no lumps |
| Example 11 | 15% by mass | 9.367 | 53.12 | Substantially no lumps |
| Example 2 | 15% by mass | 11.93 | 82.73 | Substantially no lumps |
| Example 6 | 15% by mass | 21.36 | 125.7 | No lumps |
| Comparative Example 3 | 15% by mass | 6.563 | 30.85 | Many lumps observed |
| Comparative Example 4 | 15% by mass | 7.242 | 56.93 | Relatively more lumps observed |
| Example 9 | 20% by mass | 28.14 | 143.1 | No lumps |
| Example 12 | 25% by mass | 17.35 | 130.3 | No lumps |
| Comparative Example 5 | 25% by mass | 6.440 | 28.38 | Many lumps observed |
| Reference Example A¹⁾ | - | 6.180 | 14.94 | No lumps |
| Reference Example B¹⁾ | - | 9.910 | 64.90 | No lumps |
| Reference Example C²⁾ | - | 6.374 | 14.41 | Many lumps observed |
| Reference Example D²⁾ | - | 13.89 | 43.98 | Many lumps observed |

| | | | | |
|---|---|---|---|---|
| 1) Cocoa powder 2) Matcha powder | | | | |

As can be seen from Table 3, in Examples 2, 6, 9, and 10 to 12, in which the 50% cumulative diameter was 8 µm or larger, lumps hardly formed regardless of the oil content. On the other hand, in Comparative Examples 3 to 5, in which the 50% cumulative diameter was smaller than 8 µm, it was found that many lumps were formed in an aqueous solvent regardless of the oil content, resulting in difficulty in handling (see Fig. 24). In Comparative Examples 3 to 5, as illustrated in Figs. 16 to 18, the second peak observed in Fig. 3 (Example 2) and the like did not appear. It is thus considered that the inclusion of particles having a relatively large particle diameter to some extent also contributes to suppressing formation of lumps.

In the case of cocoa powder, lumps did not occur even when the 50% cumulative diameter was smaller than 8 µm. Specifically, while many lumps were observed in Comparative Example 3 (sesame) with a 50% cumulative diameter of 6.563 µm, no lumps were formed in Reference Example A (cocoa powder) with a 50% cumulative diameter of 6.180 µm. It is considered that this is because the ground product of sesame contains a relatively large oil content and is likely to aggregate.

By contrast, matcha powder was formed into lumps even when it had a 50% cumulative diameter of 8 µm or larger. Specifically, substantially no lumps were formed in Example 2 (sesame) with a 50% cumulative diameter of 11.93 µm, whereas many lumps were observed in Reference Example D (matcha powder) with a 50% cumulative diameter of 13.89 µm. Comparing these grain size distribution diagrams, Example 2 provides a distribution diagram having two peaks as described above, while Reference Example D provides a distribution diagram close to a normal distribution having a single peak. With the ground product of sesame, the grain size distributions as in the examples are considered to be effective in suppressing the formation of lumps.

### INDUSTRIAL APPLICABILITY

The powdered beverage composition according to the present invention has a reduced fat and oil content, ease of drinking, and excellent handleability and thus can be widely used as a powdered beverage composition to be mixed in water, milk, soy milk, and other aqueous solvents.

### REFERENCE SIGNS LIST

- 1:: raw material
- 2:: heating and oil-squeezing apparatus
- 3:: coarse grinder
- 4:: grinder
- 5:: product

## Claims

1. A powdered beverage composition comprising:
a ground product of sesame, wherein
the ground product of sesame is in a non-paste form and has an oil content of smaller than 30% by mass relative to a total mass of the ground product and a 50% cumulative diameter ranging from 8 to 30 µm.

2. The powdered beverage composition according to claim 1, wherein the ground product of sesame has a 50% cumulative diameter ranging from 8 to 20 µm.

3. The powdered beverage composition according to claim 1, wherein the ground product of sesame has at least one peak in a range of particle diameter exceeding 10 µm in a grain size distribution diagram in which a vertical axis indicates existence ratio and a horizontal axis indicates particle diameter.

4. The powdered beverage composition according to claim 1, wherein the ground product of sesame has a 90% cumulative diameter ranging from 50 to 150 µm.

5. A method for producing a powdered beverage composition that comprises a ground product of sesame, the method comprising:
an oil-squeezing step of heating and oil-squeezing sesame as a raw material to make an oil content in the raw material smaller than 30% by mass; and
a grinding step of grinding the oil-squeezed raw material to be a ground product in a non-paste form that has a 50% cumulative diameter ranging from 8 to 30 µm.

6. The method for producing a powdered beverage composition according to claim 5, comprising a step of coarsely grinding the oil-squeezed raw material after the oil-squeezing step and before the grinding step.

7. The method for producing a powdered beverage composition according to claim 5, wherein the oil-squeezing step is a step of heating and oil-squeezing the sesame as the raw material at a temperature from 120°C to 180°C.

8. The method for producing a powdered beverage composition according to claim 5, wherein the grinding step is a step of grinding the oil-squeezed raw material to provide a ground product that has a 50% cumulative diameter ranging from 8 to 30 µm and a 90% cumulative diameter ranging from 50 to 150 µm.
